# EUROPEAN PATENT SPECIFICATION

(11) **EP 1 456 473 B1**
(45) Date of publication and mention of the grant of the patent: **02.11.2016**
(21) Application number: 02805293.4
(22) Date of filing: 26.11.2002
(51) Int. Cl.: D21H 27/30, D21H 25/04

(54) **METHOD FOR BONDING AT LEAST TWO PLIES OF TISSUE PAPERS TO EACH OTHER**
VERFAHREN ZUM VERBINDEN MINDESTENS ZWEIER LAGEN VON TISSUEPAPIEREN
PROCEDE DE LIAISON L'UN A L'AUTRE D'AU MOINS DEUX JETS DE PAPIER MINCE

(30) Priority: 21.12.2001 SE 0104372
(43) Date of publication of application: 15.09.2004
(73) Proprietor: SCA Hygiene Products GmbH, 68264 Mannheim (DE)
(72) Inventor: ZÖLLER, Günther, 69198 Schriesheim (DE); ROBSON, Malcolm, Prudhoe, Northumberland NE42 6PR (GB); SCHINKOREIT, Wolfram, 69518 Absteinach (DE)
(74) Representative: Zacco Sweden AB
(86) International application number: PCT/EP2002/013294
(87) International publication number: WO 2003/054301

(56) References cited:
- EP-A- 0 340 334
- EP-A- 0 483 816
- WO-A-01/45616
- WO-A-01/49932
- WO-A-01/56756
- WO-A-99/25547
- WO-A-99/37476
- US-B1- 6 200 419
- US-B1- 6 287 424

## Description

### Technical field

This invention relates to a method for autogenously ply-bonding at least two tissue paper plies and a multiply tissue paper ply-bonded with the method.

### Background of the invention

Tissue paper are often used to absorb liquids in hygienic areas. In order to improve the absorption of tissue paper more than one tissue paper ply is often combined to a multiply product. When more than one ply is used, it is advantageous to bond the plies together. It has long been known to bond tissue paper with adhesive and different types of mechanical ply-bonding methods. WO 96/32248 is one of the many patents describing the use of adhesives for ply-bonding a multiply tissue paper. The multiply paper comprises a first ply of absorbent paper web having a first pattern of protrusions and a second ply having a second pattern of protrusions. The second ply is foot-to-foot laminated to the first ply. The adhesive is positioned between the first and second plies to selected protrusions, in a predetermined decorative pattern. However, the use of adhesive tends to make the product stiff. The choice of adhesives is limited as the adhesive should preferably be water soluble to hot disturb the production process. The adhesive should not react with any of the materials it are exposed to during its use nor it should it be harmful to the user. Further the use adhesive is expensive both because of the cost of the adhesive and the fact that the production apparatus has to be more complicated than if no adhesive had been used.

Mechanical ply-bonding is an alternative to adhesive ply-bonding. Highpressure mechanical ply-bonding, knurling or edge embossing and perforation embossing are some different mechanical ply-bonding techniques. EP-A-0,672,402 describes one way of mechanical ply-bonding a multiply tissue paper with a method that includes the steps of: 1) providing at least two superposed plies of tissue paper; 2) passing the superposed plies through a crimp roll arrangement including a rotating crimp element and a rotating anvil element and 3) applying a pressure load against the rotating elements sufficient to crimp bond the plies. However, the mechanical ply-bonding achieves a fairly week bonding in the multiply tissue paper, whereby the laminate easily delaminates. Further, a mechanical ply-bonding often gives the paper an unattractive appearance especially if knurling is used.
It is known to use ultrasonic means for bonding paper materials, e.g. teabags, silk paper and package paper..

CH 399,988 and DE 11,56,303 describes ultrasonic bonding of paper for teabags and silk paper, a very, thin and smooth type of paper, respectively. The ultrasonic welding horn oscillates parallel to the surface of the treated paper. The person skilled in the art for tissue would not transfer the teachings from DE 11,56,303 and CH 399,988 to tissue paper as the paper quality is another The tea bag paper and the silk paper is planar, while tissue paper due to creping is bulky. Due to the creping an ultrasonic horn oscillating parallel to the paper surface would rub the tissue paper surface and thereby damage or even destroy it.

WO 99/25547 describes a method of ultrasonic welding of packaging paper where water is added to the bonding surfaces before the ultrasonic treatment. At least 80 % of the water applied will be removed during the ultrasonic treatment. The method is unsuitable for bonding tissue paper because of the high absorbency and wicking effect of the tissue paper. Due to these features the tissue paper will absorb the water and lead it away from the ply-bonding region so that the water concentration in ply-bonding region will be so low that the added water has no or just an infinitesimal effect. Another disadvantage with the wetting of the paper would be that a creped paper would loose its crepe wrinkles and thereby its bulk. Further, the paper would have to be dried in a subsequent step as the water that has been lead away from the bonding region will no be effected by the ultrasonic treatment and will therefor not evaporate but will stay in the paper. The problem with the low water concentration in the ply-bonding region could of course be solved in that more water is applied to the tissue paper. However, this added water increases the amount of water that has to be removed in the subsequent drying step. Therefor would the method described in WO 99/25547 be uneconomical in the production of tissue paper and would therefor not be used.

WO9937476 A1 is a prior art document disclosing a disposable wiping article having at least a first layer and a second plastic film layer. The first layer has a wet extensibility greater than that of the second layer. The first layer can be a dry creped web of cellulosic fibers, and the second layer can be an apertured, three dimensional plastic film. Selected portions of the first layer are bonded to the second layer to inhibit wet extension of the first layer in the plane of the first layer.

US 6200419 B1 is a further prior art document disclosing a paper web and method of making the paper web. The paper web may include a continuous relatively thin region and a plurality of discrete relatively thick regions. The relatively thicker regions are disposed in the plane of the relatively thinner region. The paper web can have a relatively patterned face and a relatively smooth face.

The object of the invention is to achieve a cheap tissue paper bonding method that at the same time provides good ply-bonding strength in the produced multi-ply tissue paper. A further object is to accomplish the bonding without the help of adhesive or thermoplastic material.

### Summary of the invention

This object is achieved in accordance with the present invention as defined in claims 1 and 8.

According to one preferred embodiment of the inventive method the tissue paper plies are dry during the bonding procedure. In an even more preferred embodiment the fibres the tissue paper are made of purely cellulosic fibres. It also preferred that at least one of the plies is chosen from the group of drycreped tissue paper, through-air-dried tissue paper and impulse embossed dried tissue paper.

During the bonding, the ultrasonic means oscillates perpendicularly to the surface of the tissue paper plies with a frequency from 15 to 50 kHz, preferably from 20 to 40 kHz, most preferably 35 kHz.

The invention is further characterised by a so called bonding area. The bonding area is the sum of the areas of the bonds in the ply-bonding zone. The ply-bonding zone consists of patterns of bonds. The bonds may be discrete spots or continuous lines or continuous network distributed in a pattern within the ply-bonding zone. A tissue paper could of course have a bonding area that totally covers the area of the ply-bonding zone, i.e. a bonding area of 100 %. However, such a paper could be quite stiff an unpleasant to use. Therefore, in the invention the bonding area is from 2 to 40 % and most preferred from 5 to 20 % of the area of the ply-bonding zone. This results in a tissue paper where the tissue plies can move slightly in relation to each other between the bonds which increases the feel of a soft paper.

Some tissue paper qualities e.g. household towels, usually have bonds in the form of spots distributed all over the surface of the tissue paper more or less regularly. In this case, the ply-bonding zone covers the whole tissue paper. Other tissue paper qualities, e.g. handkerchiefs, napkins and facial tissues are usually ply-bonded only in narrow zones along two or more outer side of the finished product. In these cases the ply-bonding zone consist just of this/these narrow zones. (The rest of the surface of the product is not included in the plybonding zone.)

A further preferred embodiment of the invention is to use a pressure force between the ultrasonic means and the tissue paper plies to be bonded that is from 50 to 700 N, preferably from 200 to 500 N.

An embodiment of the method according to this invention is that the tissue paper plies are ultrasonically bonded while they are transported at speed from 50 to 1800m/s, preferably, from 300 to 800 m/s.

In a further preferred embodiment lotion is applied to the tissue paper that has been bonded with the ultrasonic method. Tissue paper with lotion are difficult to ply-bond. The bonds achieved with commonly used systems with adhesive or mechanical ply-bonding means, are not strong enough and tend to break up if a lotion is applied to the paper. However, it has surprisingly been found that the ultrasonic method according to this invention achieves a bonds strong enough to withstand the strain when lotioning the tissue paper plies after the ply-bonding step. Further, the ultrasonic bonded tissue paper plies withstands the effect a fatty and/or moist lotion without weakening in contrast to common mechanical or adhesive bonds.

The invention also relates to a multiply tissue paper that has been bonded autogenously by ultrasonic bonding. Each ply of the tissue paper has a basis weight from 10 to 45 g/m². It is further preferred that the paper is dry during the bonding operation. In a preferred embodiment, the fibres of the tissue paper are made of are purely cellulosic fibres. It is also preferred that at least one of the plies is chosen from the group of dry-creped tissue paper, through-air-dried tissue paper and impulse embossed dried tissue paper. The multiply tissue paper is preferably bonded according to the method embodiments described above.

The ply-bonding zone consists of a pattern of bonds. The bonds may be discrete spots or continuous lines or continuous network distributed within the ply-bonding zone. A tissue paper according to the invention could of course have a bonding area that totally covers the area of the ply-bonding zone, i.e.a bonding area that is 100 % of the ply-bonding zone. However, such a paper could be quite stiff an unpleasant to use. Therefore, in a preferred embodiment of the invention the sum of the areas of the bonds is from 0,5 to 50 %, preferably from 2 to 40 % and most preferred from 5 to 20 % of the area of the ply-bonding zone. This will give a tissue paper where the tissue plies can move slightly in relation to each other between the bonds, which increases the feel of a soft paper.

A tissue paper product may have ply-bonding zones that covers the tissue paper product either totally or just partially. Household towels are one example of a tissue paper product where the entire product surface usually is a ply-bonding zone. A household towel usually have bonds in the form of spots distributed all over the surface of the tissue paper in a more or less regular pattern. Other tissue paper qualities, e.g. handkerchiefs, napkins and facial tissues are usually ply-bonded only in narrow zones along two or more outer side of the finished product. In these cases the ply-bonding zone consist just of this/these narrow zones. (The rest of the surface of the product is not included in the ply-bonding zone.)

A further preferred embodiment is an ultrasonically bonded tissue paper according to this invention to which lotion has been applied after the bonding step. Tissue paper with lotion are difficult to ply-bond. The bonds achieved with commonly used systems with adhesive or mechanical ply-bonding means, are not strong enough and tend to break up if a lotion is applied to the paper. However, it has surprisingly been found that the ultrasonic method according to this invention achieves a bonds strong enough to withstand the strain when lotioning the tissue paper plies after the ply-bonding step. Further, the ultrasonic bonded tissue paper plies withstands the effect a fatty and/or moist lotion without weakening in contrast to common mechanical or adhesive bonds.

### Brief description of the drawings

The invention will now be described with reference to the enclosed figures, of which;
Fig. 1 shows an schematic illustration of an apparatus for performing the method according to the invention,
Fig. 2 shows a detailed view of the apparatus in Fig. 1,
Fig. 3 shows a side view of the apparatus in Fig. 1 with a web passing through the gap,
Fig. 4 shows how ply-bonding strength samples may be taken from a paper that is bonded all over the surface,
Fig.5 shows how ply-bonding strength samples may be taken from a product bonded along the border,
Fig. 6 shows how ply-bonding strength samples may be taken from a product that is bonded in narrow strips,
Fig. 7 shows the clamping configuration when measuring ply-bonding strength, and

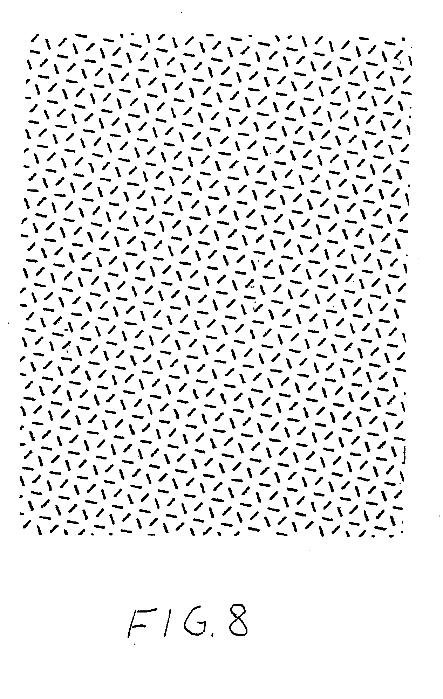

Fig. 8 shows an example of a bonding pattern for tissue paper.

### Description of embodiments

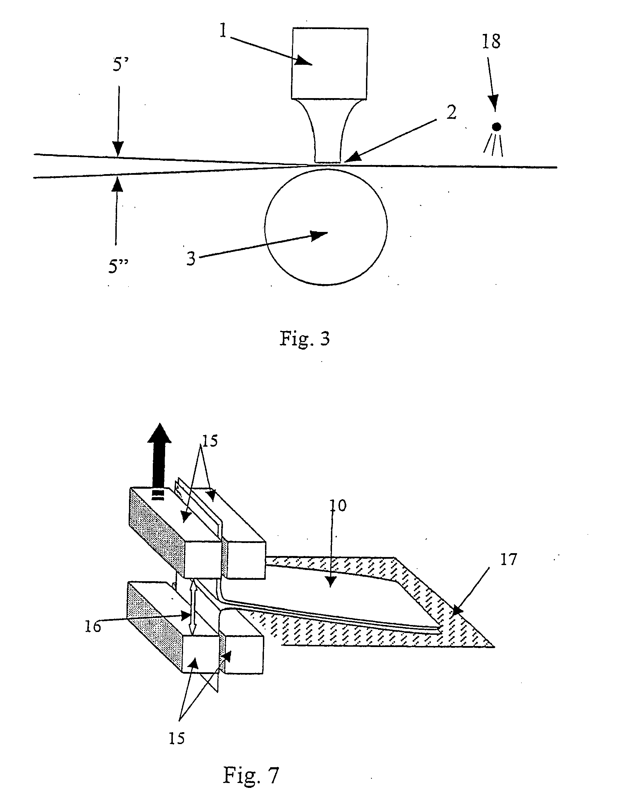

In Figure 3 is schematically shown an apparatus for autogenously bonding at least two tissue plies 5',5", each having a basis weight from 10 to 45 g/m² together. The apparatus 1,3 comprises means for feeding (not shown) two plies of tissue paper 5',5" in a face to face configuration through the apparatus. It further comprises at least one ultrasonic horn 1, which forms a bonding gap 2 with a structured anvil 3. Through this gap the tissue paper plies are fed. The ultrasonic horn 1 oscillates perpendicularly to the anvil surface 3. The apparatus also have means 18, e.g. a spray nozzle, for applying a lotion to the bonded plies after the passage of the ultrasonic means 1,3.

In the shown example the apparatus comprises a ultrasonic horn 1, but also other kinds of ultrasonic means such e.g. a rotating disc may be used. Such a disc can be used for applying a thin strip of continuous plybonding.

The anvil 3 has a width in the cross machine direction, the width being identical to or greater than the width of the tissue paper plies 5',5 ". A preferred embodiment of such an anvil is a rotatable roll.

The structured anvil has a structured surface with protrusion 4 protruding from the surface. A normal structured embossing rolls for embossing tissue paper can be used as anvil roll. The anvil roll may be made of steel or other metals. Instead of having only one ultrasonic horn that covers all the width of the anvil, it is preferred to have more than one horn being located side by side along the width of the anvil. It is preferred to have from 5 to 20 horns per meter.

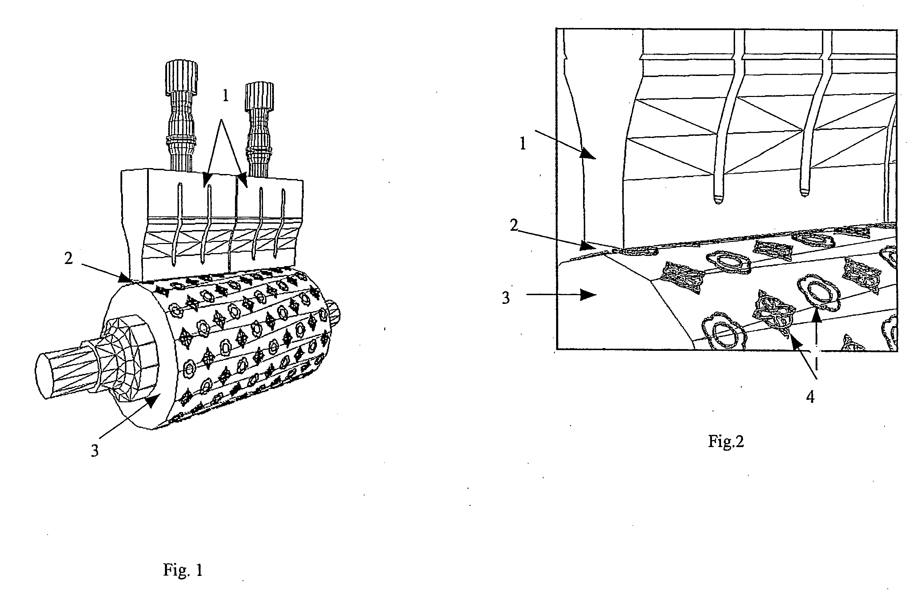

Fig. 1 shows details of the bonding apparatus according to the invention. Two ultrasonic means in the form of ultrasonic horns 1 form a bonding gap 2 with a structured anvil roll 3. The two ultrasonic horns are placed next to each other and covers the entire width W of anvil roll. It would of course be possible to use more horns if the apparatus would be wider or the horns less wide. In Fig. 2, it is easy to discern the protrusion 4 on the structured anvil roll. The protrusions have two different designs, evenly and alternately distributed over the surface of the anvil roll. The anvil roll is rotatable mounted in the bonding apparatus. Fig. 3 describes how the tissue paper plies 5', 5" can be lead through the bonding apparatus. The ultrasonic horns oscillates perpendicularly to the anvil surface in the gap.

In Fig. 1 the ultrasonic means are depicted as ultrasonic horns. However all other suitable kinds of ultrasonic means may be used, such as a rotating ultrasonic disk.

Even though the anvil cylinder has two patterns it possible to make anvil cylinders with just one type of patterns or with more than two patterns if that would be wanted. The cylinder has a smooth surface except where the protrusion 4 are disposed.

Two tissue paper plies 5', 5" are fed to the apparatus and laid face-to-face before the bonding gap 2 of the bonding apparatus. In the bonding gap 2, the plies will be bonded to each other with ultrasonic bonding between the ultrasonic horn 1 and the anvil roll 3. In this specific apparatus the anvil roll will rotate with the same speed as the tissue paper plies. In other types of machine the anvil roll may rotate in another speed than the tissue paper.

In this application, "a dry tissue paper" is a tissue paper which has a humidity content that is in equilibrium with the surrounding environment, usually air.

"Autogenously bonding" is in this application defined as a bonding of surfaces without the use of adhesive or thermoplastic material.

Tissue paper is essentially made of fibres of vegetable origin, especially of cellulosic fibres. Typical for tissue paper is its high tensile energy absorption index, in connection with its comparatively low basis weight the basis weight being from 10 to 45 g/m². Another common feature of tissue paper is its relatively high liquid absorbency. Most of the functional properties specific for a tissue paper, such as softness, drapability, liquid absorption, bulk softness, and thickness are related to the tensile energy absorption index.

Tensile energy absorption index is the volume specific tensile absorption, whereby the volume (length x width x thickness) of the test sample is decided before the measurement.

The tensile energy absorption index results from the wet or dry foreshortening of the paper web during the production process. The fibres forming the web are slurried in water. The resulting very thin fibre slurry is then introduced into the paper machine on a screen or between two screens forming a wet web by dewatering the fibre slurry. Another way of forming the web is to introduce the fibres onto the screen in the form of a aqueous foam and then dewater the foam forming a wet web. The so formed web can be then foreshortened by various techniques. Below are the most common foreshortening techniques described.

One technique used in the paper machine is based on different speeds between two consecutive fabrics between which the wet web is transferred. The first faster fabric may be the forming screen or a transfer fabric, while the second slower fabric may be another transfer fabric or a drying fabric, e.g. an imprinting or TAD-fabric. When the paper way is transferred from the fast first fabric, the fibres will accumulate because of the slower speed of the second fabric. This accumulation results in an internal breaking up of the still moist, plastically deformable web

Another foreshortening technique relating to the wet web is to adhere the still wet web to a heated wet creping cylinder in the paper machine. On this cylinder the web is dried to a dryness of about 45-80 %. Then the web is removed from the cylinder by a doctor blade. Before being adhered to the cylinder the web usually has a dryness of at least 30-50 %.

The most common way to foreshorten a paper web in a paper machine is to adhere it to drying cylinder, e.g. a Yankee cylinder, at a dryness of at least 30-50 % and to dry it until it is dry, i.e. to a dryness of at least 85-100 %. The dried web is then removed from the cylinder with a doctor blade. Thereby the paper is creped and forms many crepe wrinkles. The resulting paper has a higher bulk and thickness than the web adhered to the drying cylinder. It is also more absorbent and has a higher drapability than an uncreped paper would have.

The dried paper can also be creped outside the paper machine. The dried web is then adhered to a cylinder whereafter it is removed from the cylinder with a doctor blade. The cylinder may be heated.

There are different ways of moulding and drying the wet web in a paper machine. In an conventional tissue machine the web can be pressed after it has been removed from the forming screen to remove the amount of water left in it Thereafter the web is adhered to the Yankee cylinder as described above and removed by a doctor blade.

In the more modem through-air-drying technique (TAD), the web is partially or wholly dried with hot air that is blown through the paper. During this process, the web can be supported by an imprinting- or TAD-fabric. This TAD-fabric may have a distinct three dimensional pattern into which the web can be moulded before the TAD. The web is often transferred from the forming screen to the TAD-fabric with the rush transfer described above. The web may also be subjected to a final drying on a heated cylinder from which it may be removed with or without creping. The web is usually pressed against the heated cylinder when it is still supported on the TAD-fabric to further imprint the structure of the TAD-fabric to the paper,.

The imprinting method described above may also be incorporated in the conventional drying process described above.

Another way of drying the web is impulse embossing drying whereby the web is heated up rapidly under high pressure. When the pressure thereafter is released the heated water evaporates and expands rapidly, almost explosively. The so formed paper often have a strong the three-dimensional pattern and a high bulk.

According to the invention tissue paper is made of purely cellulosic fibres, e.g. ligno-cellulosic fibres made from wood or regenerated cellulose fibres such as viscose or lyocell. The ligno-cellulosic fibres may be made by any common chemical, chemomechanical, chemothermal-mechanical or mechanical method.

The tissue paper coming from the paper machine is often called raw tissue paper to distinguish it from the tissue paper in the final product. The raw tissue paper can be converted to the final process in many ways, e.g. through embossing, laminating, and rolling

The raw tissue paper coming from the tissue paper machine is a single ply paper. This single ply paper may comprise more than one layer. The layers in a multilayered tissue paper have been formed either with a multi-layered headbox, by forming a new layer on an existent layer or by couching together formed still wet layers. These layers can not or just with considerable difficulties be separated from each other and is joined to each other mainly by hydrogen bonds. The layer may be identical or may have different properties, regarding e.g. fibre composition and chemical composition.

Tissue papers is used in hygienic products personal grooming and hygiene, in the household sector, industry and the institutional filed for cleaning processes. They are used to absorb fluids. The tissue papers is e.g. used as toilet paper, hand towels, household towels, handkerchiefs, facial tissues and napkins. The can also be used as industrial wipes.

The tissue paper may be treated with lotions to enhance the softness and to impregnate the paper with skin treating agents. With lotion is meant all types of lotion, emollients and softener that are applied to the dry tissue paper. Most of these lotions have fatty ingredients. Examples of such lotions can be found in EP-A-1,029,9797, US-A-4,513,051, WO-A1-94/29521, WO-A1-00/64409 and WO-A-97/30217, as well as in the co-pending applications EP 01101136.8 and EP01101137.6.

### Test methods

### Basis weight

The basis weight is measured in that a climate conditioned square test sample with 10 cm sides are cut and weighed. The paper have been climatised for 24 hours in a temperature of 23° C and a humidity of 50 %.

### Ply-bonding strength

Ply-bonding strength is the average of the tensile force of all peaks exceeding the mean force. It is determined with a tensile tester operating at a constant elongation rate. The tensile tester automatically measures and records the tensile force as a function of the testing path. The ply bonding strength is calculated based on these data.

The tensile tester according to the EN ISO 1924-2 (DIN 51 221 Part 1, Class 1) shall be appropriate for testing multi-ply tissue products with specified dimensions and a constant elongation rate of (100±2) mm/min. It shall be appropriate to record the tensile force as a function of the path on a strip chart recorder or any similar device. In the test a tenslie tester Z2.5/TNls from Zwick GmbH was used.

The tensile tester shall record the values for the path to 0.1 mm. Measuring should start following an initial stress of 0.01 N. A 10 N load cell should be used.

The tensile tester shall have two clamps capable of holding a sample 50 mm wide. Each clamp shall be designed so that the sample is held tightly without causing damage along a straight line over the entire width (test span line). The weight of the upper clamp attached to the load cell should not exceed 10 g. The clamp lines shall remain parallel to each other during the test. In addition, these clamp lines shall be at a right angle to the tensile force applied and to the horizontal direction of the sample. The distance between the clamp lines (test span length) shall be adjustable to ± 1mm.

The cutting device for preparing the samples shall comply with the requirements of EN ISO 536. It shall allow samples of (50.0 ± 0.5) mm to be cut with undamaged, straight, smooth and parallel edges.

As specified in EN 20187, the samples shall be conditioned for 24 hours in a climate with a temperature of 23 °C and a humidity 50 % and kept in that climate during the test.

Each sample shall have a width of (50 ±0.5) mm. The length of sample strips shall be 100 mm in the case of full-surface bonded samples and 60 mm in the case of samples, which are bonded along the border or just in narrow strips, e.g. with edge embossing. The samples may not have any holes or flaws. With the exception of tissue paper or tissue products with embossing covering the surface partially or fully, the samples shall not have any folds, embossing, breaks or other fluctuations in thickness.

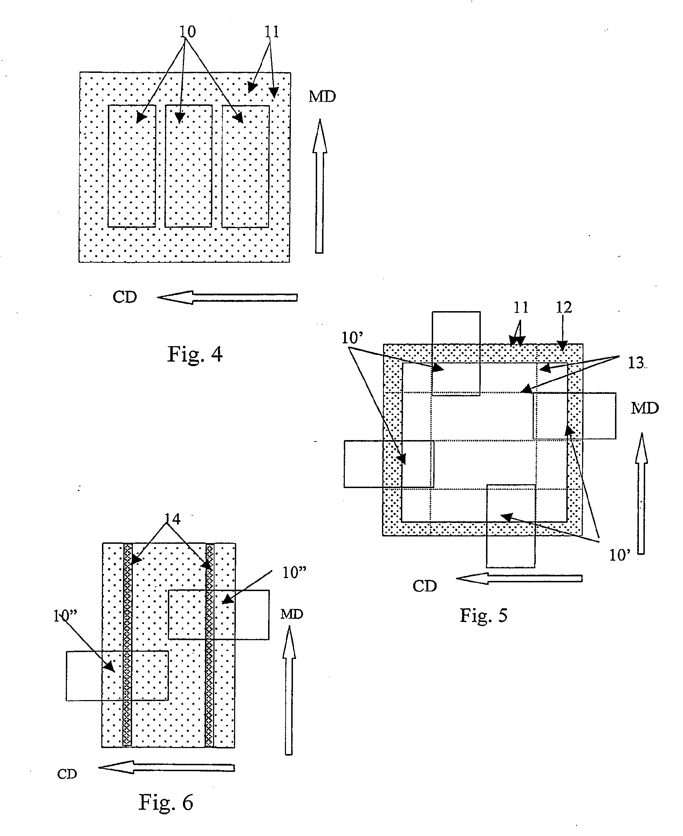

Fig. 4 shows how the samples 10 may be cut from a paper that is bonded with full-surface bonding. As can be seen from Fig. 4 the samples can be cut so that the long side of the samples is aligned with the machine direction (MD) and the short side is aligned with the cross machine direction (CD). Other alignments of the samples are also possible, e.g with the long side of sample being parallel to CD. The black points represent bonds 11.

Fig. 5 shows how samples 10' may be cut from a paper bonded along the border, e.g. a handkerchief or a napkin. The samples can be pulled in both machine direction (MD) and cross direction (CD). The ply-bonding zone 12 at the border is covered with bonds 11. The samples are cut so that a long side of the ply-bonding zone of each sample will be perpendicular to the pulling direction. Further the samples are cut so that no folds 13 of the tissue paper are included in the samples.

Fig. 6 shows how samples 10" may be cut from tissue paper sheets that are bonded in thin strips 14, e.g. by edge embossing. Examples of such papers are toilet paper and facial tissues. Also in this case, the samples are cut so that a long side of the ply-bonding zone of each sample will be perpendicular to the pulling direction.

The multi-ply sample 10 is fixed in the clamps 15 without any visible sagging and without the sample being under tension. The test surface of the sample between the clamps may not be touched with fingers. When the sample is aligned correctly, the test is carried out. The ply bonding is measured on 50 mm wide, conditioned samples at a free test span length 16 of 30 mm, see figure 7, with an elongation rate of 100 mm/min. A 10N measuring cell is needed. The clamps shall be designed so that there is no initial stress when the sample is fixed and the sample does not slip when load is applied. The upper clamp holding the sample should not weigh more than 10 g including holding pin, to maintain the measuring cell's background noise at a low level. The test path is 100 mm for full-surface bonded products. In the case of products with border or edge embossing, the test of separating the plies is interrupted.

The individual plies of the two-ply or multi-ply test strips shall separated on one end at a length of 2 cm. In a 3-ply product, for instance, ply 1 is then separated from plies 2/3. The single ply is then fixed in the lower clamp. Subsequently, plies 2 and 3 are separated from each other.

During the test, the end of the strip not fixed in the clamp should hang down freely or rest on a smooth, horizontal surface 17.

The results shall be calculated separately for machine direction and cross direction. The average value of the force maximum within the measuring path and the mean value of the peaks over the total mean value shall be calculated and stated in Newton:
Fmax Lm: Force maximum within the measuring path
Mean value Fmax Sp: Mean value of the peaks over the total mean value

### Example 1

Trials have been made according to this invention. Two plies of the base tissue for the Double Velvet base tissue from SCA Hygiene Products containing cellulosic virgin fibres was used. The base tissue has a basis weight of 22 g/m². The two tissue plies was bonded by ultrasonic bonding using the parameters stated below.

| | | |
|---|---|---|
| *Ultrasonic horn* | *Herrmann Ultraschalltechnik* | |
| *Calender* | *Eduard Küster Maschinenbau* | |
| *Bonding pattern* | *See* *figure 8* | |
| *Ultrasonic frequency* | *35 kHz* | |
| *Pressure force* | *400 N* | |
| *Line speed* | *Trial 1: 50 m*/*min* | *Trial* 2: *300 m*/*min* |
| *Pressure area* | *8,3 % of the area of the ply-bonding zone* | |
| *Result* | | |
| *Ply-bonding strength Fmax LM N*/*50 mm* | *Trial 1:0.163* | *Trial 2:0,645* |

These trials shows that it is possible to get a god ply-bonding by ultrasonic bonding of dry tissue paper plies.

### Example 2

Further trials according this invention have been done with tissue with or without lotion. Two plies of the base tissue for the Zewa Soft base tissue containing cellulosic virgin fibres from SCA Hygiene Products was used. The base tissue has a basis weight of 18 g/m². The two tissue plies was bonded by ultrasonic bonding at different speeds. The same ultrasonic equipment as in example 1 was used with the same ultrasonic frequency and pressure force. Trial 1-3 was made without lotion. In trial 4, 3 g/m² of a lotion composition was then sprayed onto one side of the bonded tissue paper. The plybonding strength was measured before and after the lotion was applied.

The lotion composition used was by weight 5.3 % polyglyceryl poly(12-hydroxy stearate)(PGPH), 5.3 % lauryl glucoside, 3.0 % glyceryle stearate (Cutina®MD available from Cognis Deutschland GmbH, Tyskland), 30 % cocoglyceride (Myritol®331 available from Cognis Deutschland GmbH, Tyskland), 30 % di-n-octyl carbonate (Cetiol® CC available from Cognis Deutschland GmbH, Tyskland), 0.1 % citric acid (citric acid is present for pH adjustment in the from Cognis Deutschland GmbH, Tyskland commercially available emulsifier combination Eumulgin® VL 75, based on PGPH,lauryl glycoside, glycerol and water, which was used for preparing the lotion, 1.5 % bisabolol, 4.0 % glycerol, Phenonip®( a from Clariant Deutschland, Tyskland commercially available preservative mixture containing phenoxyethanol as well as methyl-, ethyl- propyl- and butylparaben) and water up to 100 %.

The lotion composition had a viscosity of about 300 mPaxs at 23°C (measured with a Brookfield-RVF viscosimeter, spindle 5, 10 rpm). Conductivity measurements showed that the above lotion is of O/W type.

| *Trial* | *Machine speed m*/*min* | *Plybonding strength before lotion application Mean value Fmax SP* | *Plybonding strength after lotion application Mean Value Fmax SP* |
|---|---|---|---|
| *1* | *50* | *0,041* | |
| *2* | *100* | *0,141* | |
| *3* | *150* | *0,256* | |
| *4* | *200* | | *0,182* |

As can be seen from example 2 the ply-bonding strength increases with the machine speed. Therefore it is assumed that the ply-bonding strength before the lotion was applied to the tissue paper in trial 4 is higher than for the tissue paper in trial 3. It can further be seen from the table that the addition of lotion does not weaken the ply-bonding strength to a level below the wanted.

## Claims

1. A method for producing a multi-ply tissue paper by autogenously bonding at least two plies of dry tissue paper, i.e. a tissue paper which has a humidity content in equilibrium with surrounding environment, with a basis weight from 10 to 45 g/m², comprising the steps of laying the plies face-to-face, bonding the plies to each other with the help of ultrasonic means, the at least one ultrasonic horn of the ultrasonic means oscillates perpendicular to the surface to the tissue paper plies, wherein the bonding area, which is the sum of the areas of bonds in a ply-bonding zone, is from 2 to 40 % of the area of the ply-bonding zone, the ply-bonding zone consists of pattern or patterns of bonds and the ply-bonding zone covers the whole tissue paper or narrow zones along two or more outer sides of a finished product, wherein at least one of the plies is chosen from the group of dry-creped tissue paper, through-air-dried tissue paper and impulse embossed dried tissue paper.

2. A method according to claim 1, wherein the bonding area is 5 to 20 % of the area of the ply-bonding zone.

3. A method according to claim 1 or 2, wherein the tissue paper fibres are purely cellulosic fibres.

4. A method according to any of the preceding claims, wherein the at least one horn of the ultrasonic means oscillates with a frequency from 15 to 50 kHz, preferably from 20 to 40 kHz, most preferably 35 kHz.

5. A method according to any of the preceding claims, wherein the pressure force between the at least one horn of the ultrasonic means and the tissue paper plies to be bonded is from 50 to 700 N, preferably from 200 to 500 N.

6. A method according to any of the preceding claims, wherein the paper plies are ultrasonically bonded while they are transported at speed from 50 to 1800m/s, preferably, from 300 to 800 m/s.

7. A method according to any of the preceding claims, wherein lotion is added to the bonded surface

8. A multi-ply tissue paper produced by the method according to claim 1, each ply of the tissue paper having a basis weight from 10 to 45 g/m², wherein it is bonded autogenously by ultrasonic means and the sum of the areas of the bonds is 2 to 40 % of the area of the ply-bonding zone, the ply-bonding zone consists of pattern or patterns of bonds and the ply-bonding zone covers the whole tissue paper or narrow zones along two or more outer sides of a finished product, wherein at least one of the plies is chosen from the group of dry-creped tissue paper, through-air-dried tissue paper and impulse embossed dried tissue paper.

9. A multi-ply tissue paper according to claim 8, wherein the sum of the areas of the bonds is 5-20 %, of the area of the ply-bonding zone.

10. A multi-ply tissue paper according to claim 8 or 9, wherein the tissue paper fibres are purely cellulosic fibres.

11. A multi-ply tissue paper according to any one of claims 8-10, wherein the tissue paper contains a lotion.

## Patentansprüche

1. Verfahren zum Herstellen eines mehrlagigen Tissuepapiers durch autogenes Verbinden mindestens zweier Lagen trockenen Tissuepapiers, d.h. einem Tissuepapier, das einen Feuchtigkeitsgehalt im Gleichgewicht mit der Umgebung aufweist, mit einem Flächengewicht von 10 bis 45 g/m², umfassend die Schritte eines Angesicht zu Angesicht Legens der Lagen, eines miteinander Verbindens der Lagen mithilfe eines Ultraschallmittels, wobei das mindestens eine Ultraschallhorn des Ultraschallmittels senkrecht zu der Fläche der Tissuepapierlagen oszilliert, der Verbindungsbereich, welcher die Summe der Verbindungsflächen in einer Lagenverbindungszone ist, 2 bis 40 % der Fläche der Lagenverbindungszone beträgt, die Lagenverbindungszone aus einem Muster oder Mustern von Verbindungen besteht, die Lagenverbindungszone das gesamte Tissuepapier oder enge Zonen entlang zweier oder mehrerer äußerer Seiten eines fertigen Produkts bedeckt und zumindest eine der Lagen aus der Gruppe aus trockengekrepptem Tissuepapier, durchluftgetrocknetem Tissuepapier und impulsgeprägtem getrockneten Tissuepapier ausgewählt wird.

2. Verfahren nach Anspruch 1, bei dem der Verbindungsbereich 5 bis 20 % der Fläche der Lagenverbindungszone beträgt.

3. Verfahren nach Anspruch 1 oder 2, bei dem die Tissuepapierfasern ausschließlich Zellulosefasern sind.

4. Verfahren nach einem der vorstehenden Ansprüche, bei dem das mindestens eine Horn des Ultraschallmittels mit einer Frequenz von 15 bis 50 kHz, bevorzugt von 20 bis 40 kHz und am meisten bevorzugt von 35 kHz oszilliert.

5. Verfahren nach einem der vorstehenden Ansprüche, bei dem die Druckkraft zwischen dem mindestens einen Horn des Ultraschallmittels und der zu verbindenden Tissuepapierlagen von 50 bis 700 N und bevorzugt von 200 bis 500 N beträgt.

6. Verfahren nach einem der vorstehenden Ansprüche, bei dem die Papierlagen per Ultraschall verbunden werden, während sie mit einer Geschwindigkeit von 50 bis 1800 m/s und bevorzugt von 300 bis 800 m/s transportiert werden.

7. Verfahren nach einem der vorstehenden Ansprüche, bei dem der verbundenen Fläche eine Lotion hinzugefügt wird.

8. Mehrlagiges Tissuepapier, das durch das Verfahren nach Anspruch 1 hergestellt wurde, wobei jede Lage des Tissuepapiers ein Flächengewicht von 10 bis 45 g/m² aufweist und es durch ein Ultraschallmittel autogen verbunden ist und die Summe der Verbindungsflächen 2 bis 40 % der Fläche der Lagenverbindungszone beträgt, die Lagenverbindungszone aus einem Muster oder Mustern von Verbindungen besteht und die Lagenverbindungszone das gesamte Tissuepapier oder enge Zonen entlang zweier oder mehrerer äußerer Seiten eines fertigen Produkts bedecken und mindestens eine der Lagen aus der Gruppe aus trockengekrepptem Tissuepapier, durchluftgetrocknetem Tissuepapier und impulsgeprägtem trockenen Tissuepapier ausgewählt ist.

9. Mehrlagiges Tissuepapier nach Anspruch 8, bei dem die Summe der Flächen der Verbindungen 5 bis 20 % der Fläche der Lagenverbindungszone beträgt.

10. Mehrlagiges Tissuepapier nach Anspruch 8 oder 9, bei dem die Tissuepapierfasern ausschließlich Zellulosefasern sind.

11. Mehrlagiges Tissuepapier nach einem der Ansprüche 8 bis 10, wobei das Tissuepapier eine Lotion enthält.

## Revendications

1. Procédé de fabrication d'un papier mince à plusieurs épaisseurs par liage autogène d'au moins deux épaisseurs de papier mince sec, c.-à-d. un papier mince ayant une teneur en humidité en équilibre avec l'environnement qui l'entoure, avec un grammage de 10 à 45 g/m², comprenant les étapes qui consistent à disposer les épaisseurs face à face, à lier les épaisseurs les unes aux autres à l'aide d'un moyen ultrasonique, ledit au moins un émetteur d'ultrasons du moyen ultrasonique oscillant perpendiculairement à la surface des épaisseurs de papier mince, dans lequel la surface de liage, qui est la somme des surfaces des liaisons dans une zone de liage d'épaisseurs, représente 2 à 40 % de la surface de la zone de liage d'épaisseurs, la zone de liage d'épaisseurs consistant en un ou plusieurs motifs formés de liaisons et la zone de liage d'épaisseurs couvrant l'ensemble du papier mince ou des zones étroites le long de deux côtés extérieurs ou plus d'un produit fini, dans lequel au moins l'une des épaisseurs est sélectionnée dans le groupe constitué d'un papier mince crêpé à sec, d'un papier mince séché par passage d'air à travers celui-ci, et d'un papier mince séché par chauffage rapide sous haute pression puis évacuation de la pression.

2. Procédé selon la revendication 1, dans lequel la surface de liage représente 5 à 20 % de la surface de la zone de liage d'épaisseurs.

3. Procédé selon la revendication 1 ou 2, dans lequel les fibres du papier mince sont des fibres de cellulose pure.

4. Procédé selon l'une quelconque des revendications précédentes, dans lequel ledit au moins un émetteur d'ultrasons du moyen ultrasonique oscille à une fréquence de 15 à 50 kHz, préférablement de 20 à 40 kHz, idéalement de 35 kHz.

5. Procédé selon l'une quelconque des revendications précédentes, dans lequel la force de pression entre ledit au moins un émetteur d'ultrasons du moyen ultrasonique et les épaisseurs de papier mince à lier est de 50 à 700 N, préférablement de 200 à 500 N.

6. Procédé selon l'une quelconque des revendications précédentes, dans lequel les épaisseurs de papier sont liées par ultrasons pendant leur transport à une vitesse de 50 à 1 800 m/s, préférablement de 300 à 800 m/s.

7. Procédé selon l'une quelconque des revendications précédentes, dans lequel une lotion est ajoutée à la surface liée.

8. Papier mince à plusieurs épaisseurs produit par le procédé selon la revendication 1, chaque épaisseur du papier mince ayant un grammage de 10 à 45 g/m², ledit papier étant lié par liage autogène par un moyen ultrasonique et la somme des surfaces des liaisons représentant 2 à 40 % de la surface de la zone de liage d'épaisseurs, la zone de liage d'épaisseurs consistant en un ou plusieurs motifs formés de liaisons et la zone de liage d'épaisseurs couvrant l'ensemble du papier mince ou des zones étroites le long de deux côtés extérieurs ou plus d'un produit fini, dans lequel au moins l'une des épaisseurs est sélectionnée dans le groupe constitué d'un papier mince crêpé à sec, d'un papier mince séché par passage d'air à travers celui-ci, et d'un papier mince séché par chauffage rapide sous haute pression puis évacuation de la pression.

9. Papier mince à plusieurs épaisseurs selon la revendication 8, dans lequel la somme des surfaces des liaisons représente 5 à 20 % de la surface de la zone de liage d'épaisseurs.

10. Papier mince à plusieurs épaisseurs selon la revendication 8 ou 9, les fibres du papier mince étant des fibres de cellulose pure.

11. Papier mince à plusieurs épaisseurs selon l'une quelconque des revendications 8 à 10, le papier mince contenant une lotion.
